# EUROPÄISCHE PATENTSCHRIFT

(11) **EP 0 523 541 B1**
(45) Veröffentlichungstag und Bekanntmachung des Hinweises auf die Patenterteilung: **28.12.1994**
(21) Anmeldenummer: 92111642.2
(22) Anmeldetag: 09.07.1992
(51) Int. Cl.: B23Q 16/06

(54) **Manuell betriebener Rundschalttisch**
Manually operated rotary indexing table
Table manuelle à transfert circulaire

(30) Priorität: 17.07.1991 DE 4123627
(43) Veröffentlichungstag der Anmeldung: 20.01.1993
(73) Patentinhaber: FEHLINGS AUTOMATION GmbH, D-65396 Walluf (DE)
(72) Erfinder: Fehlings, Herbert, W-6229 Walluf (DE)
(74) Vertreter: Quermann, Helmut, Dipl.-Ing.

(56) Entgegenhaltungen:
- DE-B- 1 268 934
- FR-A- 1 212 149
- US-A- 1 511 447
- US-A- 4 050 355

## Beschreibung

Die Erfindung betrifft einen Rundschalttisch mit einer Lagerplatte, einem in der Lagerplatte drehbar gelagerten Schaltteller, mehreren Schaltbolzen, die radial gerichtet im Schaltteller gelagert sind, sowie einem mit der Lagerplatte verbundenen Anschlag zum Begrenzen der Drehung des Schalttellers durch Anlage des äußeren Endes eines Schaltbolzens am Anschlag.

Rundschalttische dienen vornehmlich der Montage gegebenenfalls Bearbeitung von auf diesem angeordneten Bauteilen. Hierzu weist der Rundschalttisch einen drehbar gelagerten Schaltteller auf, der unmittelbar oder über eine auf diesem angeordnete und mit ihm verbundene Aufnahmeplatte einen oder mehrere Gegenstände aufnimmt, die zu montieren oder zu bearbeiten sind. Durch Drehung des Schalttellers kann der Gegenstand in die nächste gewünschte Montageposition (Bearbeitungsposition) bzw. bei Anordnung mehrerer Gegenstände der nächstfolgende Gegenstand in den Arbeitsbereich des Montierenden gedreht werden.

In der Praxis sind sowohl fremdbetriebene als auch manuell betriebene Rundschalttische bekannt. Bei beiden Versionen finden Schaltbolzen Verwendung, die in der jeweils gewünschten Position eine Rastverbindung zwischen dem Schaltteller und einer diesen aufnehmenden Lagerplatte herstellen. Dort sind Schaltbolzen in der Lagerplatte gelagert und in Ausnehmungen im Schaltteller rastierbar. Das Lösen der Rastverbindungen erfolgt in erster Linie automatisch.

Von besonderem Nachteil ist bei bekannten Rundschalttischen, daß die wesentlichen Steuerungselemente, das heißt insbesondere die Schaltbolzen, außerhalb des Schalttellers gelagert sind, insbesondere in der Lagerplatte, womit sich nicht nur komplizierte Steuerungsvorgänge zum Rastieren des Schalttellers ergeben, sondern es auch problematisch ist, den Rundschalttisch auf unterschiedliche Schaltwinkel und unterschiedlich große Aufnahmeplatten umzurüsten.

Aus der DE-AS 17 77 245 ist ein Rundschalttisch der eingangs genannten Art bekannt, der fremdbetrieben ist. Bei diesem ist ein Anschlag vorgesehen, der dem Begrenzen der Drehung des Schalttellers entgegen der vorgesehenen Drehbewegung des Rundschalttisches bei der Montage/Bearbeitung der auf diesem angeordneten Bauteile dient. Wenn der Rundschalttisch beim Schwenken in Drehrichtung über die vorgesehene Schaltstellung hinausgelaufen ist, wird die Schwenkbewegung unterbrochen und der Anschlag in die Bewegungsbahn des interessierenden Schaltbolzens eingeschwenkt, anschließend wird der Rundschalttisch entgegen der Drehrichtung zurückgeschwenkt, bis der betreffende Schaltbolzen an den Anschlag anschlägt. In dieser Stellung wird der Rundschalttisch dann festgehalten, bis eine erneute Schwenkbewegung erforderlich ist. Bei dem bekannten Rundschalttisch sind darüber hinaus die Schaltbolzen radial justierbar und mit einer gegen ihre Achse geneigten Anschlagfläche versehen, so daß ein einfaches Justieren bzw. Nachjustieren der Schaltstellungen des Rundschalttisches möglich ist. - Auch dieser bekannte Rundschalttisch weist den Nachteil auf, daß komplizierte Steuerungsvorgänge zum Festlegen des Schalttellers erforderlich sind, da der eine Anschlag den Schaltteller nur entgegen der Drehrichtung blockieren kann, womit es beispielsweise erforderlich ist, Haltekräfte zum Fixieren des Schalttellers über den bewegbaren Anschlag in den Schaltteller einzubringen. Der nur eine Anschlag kann nicht gewährleisten, daß der Rundschalttisch eine genaue Schaltstellung einnimmt. Abgesehen hiervon ist es aufwendig, den Rundschalttisch auf unterschiedliche Schaltwinkel umzurüsten, da die Schaltbolzen jeweils kompliziert zu justieren sind. Dessen ungeachtet benötigt der Rundschalttisch aufgrund des Umstandes, daß er fremdbetrieben ist, einen hohen Bau- und Steuerungsaufwand, um dessen Funktion zu gewährleisten, was mit hohen Kosten verbunden ist.

Aus JP 1-28 18 850 (A) In: Patents Abstr. of Japan, Sect. M. Vol 14 (1990), Nr. 56 (M-929) ist ein fremdbetriebener Rundschalttisch bekannt, dessen drehbar gelagerter Schaltteller an seiner Unterseite mehrere parallel zur Drehachse des Schalttellers auf einem konzentrischen Kreis zur Drehachse angeordnete Schaltbolzen aufweist, wobei jeweils zwei Schaltbolzen mit einer, unterschiedliche Steigung aufweisenden, antreibbaren Schnecke zusammenwirken. Der große Steigungsbereich der Schnecke bedingt eine Schwenkbewegung des Schalttellers, während bei einem Zusammenwirken der beiden Schaltbolzen mit dem keine Steigung aufweisenden Bereich der Schnecke der Schaltteller stillgesetzt ist. Eine die Schnecke antreibende Welle ist mit einer Scheibe verbunden, in der ein Arretierstift exzentrisch geführt ist, derart, daß beim Zusammenwirken des keine Steigung aufweisenden Bereiches der Schnecke mit den beiden Schaltbolzen eine ausgeprägte Exzentrizität der Scheibe den Arretierstift in eine eine Schaltstellung des Rundschalttisches repräsentierende Ausnehmung im Schaltteller eingeführt wird und damit den Rundschalttisch arretiert. Entsprechend den gewünschten Schaltstellungen des Rundschalttisches sind auf einem konzentrischen Kreis mehrere beabstandete Ausnehmungen zur Aufnahme des Arretierstiftes vorgesehen. - Auch dieser Rundschalttisch ist fremdbetrieben und macht komplizierte Steuerungsvorgänge zum Rastieren des Schalttellers erforderlich. Wegen der Zwangssteuerung zwischen Schaltbolzen, Schnecke, Scheibe und Arretierstift kann der Rundschalttisch auch nicht ohne weiteres auf unterschiedliche Schaltwinkel umgerüstet werden.

Aus der DE-B-1 268 934 ist schließlich eine Einrichtung an Mehrspindeldrehbänken zur Begrenzung des Überlaufes und zur Dämpfung des entstehendes Stoßes bei der Drehung einer in einem Maschinengestell gelagerten Spindeltrommel in ihre jeweiligen Arbeitsstellungen bekannt. Die Spindeltrommel weist entsprechend der Anzahl der Spindeln Vorsprünge auf, die radial gerichtet in dieser gelagert sind. Ein erster Anschlag, der mit dem Maschinengestell verbunden ist, dient dem Begrenzen der Drehung der Spindeltrommel in Drehrichtung durch Anlage des äußeren Endes eines Vorsprunges am ersten Anschlag, während ein zweiter Anschlag, der gleichfalls mit dem Maschinengestell verbunden ist, zum Begrenzen der Drehung der Spindeltrommel entgegen der Drehrichtung durch Anlage des äußeren Endes dieses Vorsprunges am zweiten Anschlag vorgesehen ist. Die genaue Einstellung der Lage der Spindeltrommel in ihrer Arbeitsstellung wird dadurch erzielt, daß die Spindeltrommel diese Lage ein wenig überläuft und durch eine Einrichtung gegen den zweiten Anschlag zurückgeführt wird, der durch einen abgefederten Stift gegen die in der Drehrichtung rückwärtige Seite des Nockens gedrückt wird.

Es ist Aufgabe der vorliegenden Erfindung, einen manuell betriebenen, baulich einfachen Rundschalttisch zu schaffen, der auch die Voraussetzungen für eine einfache Umrüstung des Rundschalttisches bietet.

Gelöst wird die Aufgabe durch einen Rundschalttisch der eingangs genannten Art, der darüber hinaus folgende Merkmale aufweist:
- einen ringförmigen Schaltteller,
- eine Kurvenscheibe, die mit der Lagerplatte drehfest verbunden ist und den vom Schaltteller umschlossenen Raum durchsetzt, wobei die Schaltbolzen im Schaltteller verschieblich gelagert sind und das innere Ende des jeweiligen Schaltbolzens mit der Kurve der Kurvenscheibe zusammenwirkt,
- einen ersten Anschlag, der mit der Lagerplatte verbunden ist, zur Begrenzung der Drehung des Schalttellers in Drehrichtung durch Anlage des äußeren Endes eines ausgeschobenen Schaltbolzens am ersten Anschlag,
- einen zweiten Anschlag, der mit der Lagerplatte verbunden ist, zum Begrenzen der Drehung des Schalttellers entgegen der Drehrichtung durch Anlage des äußeren Endes eines ausgeschobenen Schaltbolzens am zweiten Anschlag,
- Mitteln im Bereich des ersten Anschlages zum Einschieben des diesem zugeordneten Schaltbolzens gegen die Kurvenscheibe.

Wesentlich ist bei dem erfindungsgemäßen Rundschalttisch, daß die Schaltbolzen im Schaltteller gelagert sind und deren Steuerung durch ein Bauteil in Form der Kurvenscheibe erfolgt, die innerhalb des von der Schaltplatte umschlossenen Raumes angeordnet ist. Für die beiden Anschläge, die entgegengesetzt arbeiten, ergibt sich so eine Zwangssteuerung des Rundschalttisches. Bei an den beiden Anschlägen anliegenden Schaltbolzen verhindert der erste Anschlag eine Drehbewegung des Schalttellers in Drehrichtung, während der zweite Anschlag eine Bewegung des Schalttellers entgegen dessen üblicher Drehrichtung blockiert. Erst dann, wenn die Rastierung in Drehrichtung durch Einschieben des zugeordneten Schaltbolzens aufgehoben wird, besteht die Möglichkeit, den Schaltteller und damit den bzw. die auf dem Rundschalttisch angeordneten, zu montierenden oder zu bearbeitenden Gegenstände weiterzudrehen.

Bei dem erfindungsgemäßen Rundschalttisch wird die Bewegung der Schaltbolzen nach außen über die Kurvenscheibe gesteuert. Es ist dabei nicht erforderlich, daß sich die wirksame Kurve über einen Schwenkwinkel des Schalttellers von 360° erstreckt. Wesentlich ist nur, daß die Kurve durch die Relativbewegung zwischen Schaltteller und Lagerplatte den jeweiligen Schaltbolzen von deren eingeschobenen Position in deren ausgefahrene Position verschiebt. Das Zurückschieben des jeweiligen Schaltbolzens gegen die Kurvenscheibe erfolgt durch die besonders vorgesehenen Mittel. Die Arretierung des Schalttellers kann durchaus im Bereich eines einzigen Schaltbolzens erfolgen, auf dessen gegenüberliegende Seiten die beiden Anschläge einwirken. Insbesondere wegen der einfacheren baulichen Anordnung wird es jedoch als zweckmäßig angesehen, wenn die beiden Anschläge auf unterschiedliche Schaltbolzen einwirken.

Bei dem Rundschalttisch ist vorteilhaft der erste Anschlag fest mit der Lagerplatte verbunden, und es weist dieser eine radiale Anschlagfläche für den zugeordneten Schaltbolzen auf, ferner sollten die Mittel zum Einschieben dieses in Anschlagstellung befindlichen Schaltbolzens einen in dessen Axialrichtung wirksamen, kraftbetätigten Stößel umfassen. Eine Weiterbildung sieht vor, daß die Mittel eine Kolben-Zylinder-Einheit aufweisen, insbesondere eine pneumatisch wirkende Kolben-Zylinder-Einheit, die mit dem Anschlag oder der Lagerplatte fest verbunden ist, wobei mit dem Kolben der Stößel verbunden ist und der Kolben in Einschubrichtung des Schaltbolzens entgegen der Kraft einer Feder beaufschlagbar ist. Während der Anschlag mit der Anschlagfläche der definierten Festlegung des Schalttellers über den aus diesem herausragenden, zugeordneten Schaltbolzen dient, ermöglicht die Kolben-Zylinder-Einheit das Zurückschieben des zugeordneten Schaltbolzens.

Gemäß einer besonderen Ausführungsform der Erfindung ist vorgesehen, daß ein dem ersten Anschlag zugeordneter Näherungsschalter zum Erfassen des an dessen Anschlag anliegenden Schaltbolzens vorgesehen ist. Die konkrete Gestaltung sieht vor, daß im ersten Anschlag ein Schaltstift zum Kontaktieren des diesem Anschlag zugeordneten Schaltbolzens angeordnet ist, der die Anschlagfläche durchsetzt, wobei der Schaltstift in Drehrichtung des Schalttellers gegen die Kraft einer Feder und entgegen der Drehrichtung des Schalttellers gegen einen Vorsprung im Anschlag verschieblich ist, wobei ferner mit dem Schaltstift der mit dem Anschlag verbundene Näherungsschalter zusammenwirkt und der Schaltstift den Näherungsschalter bei relativ gespannter Feder betätigt. Die Verschiebebewegung des Schaltbolzens bei in Anlage an den ersten Anschlag gelangenden zugeordneten Schaltbolzen führt zur Betätigung des Näherungsschalters, der beispielsweise dem Zweck dient, anzugeben, daß sich der Schaltteller in der genannten definierten Position befindet und damit in beiden Drehrichtungen verrastet ist.

Gemäß einer bevorzugten Ausführungsform ist weiterhin vorgesehen, daß der zweite Anschlag um eine parallel zur Drehachse des Schwenktellers angeordnete Achse schwenkbar mit der Lagerplatte verbunden ist und ein Schwenkarm dieses Anschlages, ausgehend von der Achse, in Drehrichtung des Schalttellers orientiert ist, sowie eine Feder den Schwenkarm in Richtung des Schalttellers beaufschlagt, wobei der dem Schaltteller zugewandte Bereich des Schwenkarmes eine Gleitfläche für das äußere Ende des zugeordneten Schaltbolzens sowie das freie Ende des Schwenkarmes eine radiale Anschlagfläche für den zugeordneten Schaltbolzen aufweist. Bei dieser Gestaltung wird der Schwenkarm durch den jeweils in dessen Bereich angeordneten Schaltbolzen entgegen der Kraft der Feder verschwenkt, wobei die Kraftübertragung durch den Schaltbolzen deshalb möglich ist, weil dessen inneres Ende sich an der Kurvenscheibe abstützt. Mit zunehmender Schwenkbewegung des Schwenktellers entlang des Schwenkarmes bedingt das äußere Ende des zugeordneten Schaltbolzens beim Bewegen über die Gleitfläche einen größeren Schwenkwinkel des Schwenkarmes. Nachdem der zugeordnete Schaltbolzen über das freie Ende des Schwenkarmes gedreht ist, drückt die Feder den Schwenkarm mit der radialen Anschlagfläche in Drehrichtung des zugeordneten Schwenkbolzens gesehen hinter diesen, so daß ein Drehen des Schalttellers entgegen dessen üblicher Drehrichtung ausgeschlossen ist. In diesem Zusammenhang ist die Anschlagfläche vorteilhaft unter einem Konuswinkel zur Längsachse des zugeordneten Schaltbolzens angeordnet. Unter einem Konuswinkel wird dabei ein geringer Winkel zur Längsachse, beispielsweise 2 bis 5°, verstanden. Die Konusform, die insbesondere von der Drehachse des Schalttellers weg in Richtung der Längsachse des Schaltbolzens geneigt ist, bedingt, daß die unter dem Konuswinkel zum Schaltbolzen angeordnete Anschlagfläche den Schaltbolzen im Sinne einer geringfügigen Schwenkbewegung in Drehrichtung des Schwenktellers beaufschlagt und gegen den ersten Anschlag vorspannt. Um die Schwenkbolzen exakt zwischen dem ersten und dem zweiten Anschlag zu führen, sollten die den beiden Anschlägen zugeordneten Anschlagfläche nach innen gewölbt ausgebildet sein und eine im wesentlichen der Krümmung des zugeordneten Schaltbolzens entsprechende Krümmung aufweisen.

Da der zweite Anschlag den zugeordneten Schaltbolzen entgegen der Drehrichtung des Schwenktellers festlegt, ist es grundsätzlich nicht erforderlich, den zweiten Anschlag zu lösen. Es wird aber dennoch als vorteilhaft angesehen, wenn Mittel zum Verschwenken des Schwenkarmes entgegen der Kraft der Feder vorgesehen sind. Diese Mittel sind vorteilhaft als Kolben-Zylinder-Einheit, insbesondere pneumatisch wirkende Kolben-Zylinder-Einheit, ausgebildet, wobei der beaufschlagte Kolben auf einen Ansatz des L-förmig ausgebildeten zweiten Anschlages einwirkt. Die Verwendung von kraftbetätigten Mitteln bietet sich insbesondere bei der Konusform der Anschlagfläche des zweiten Anschlages an, der den Schwenkteller mit den den Anschlägen zugeordneten Schaltbolzen gegen die Anschläge verspannt.

Gemäß einer besonderen Ausführungsform der Erfindung ist vorgesehen, daß die Kurvenscheibe in einem Teilbereich die Form einer Spirale aufweist. Durch einen stetig zunehmenden Durchmesser wird sichergestellt, daß die Schaltbolzen bei der relativen Drehbewegung zwischen dem Schaltteller und der Kurvenscheibe stetig radial nach außen bewegt werden. Besonders vorteilhaft erstreckt sich die Spirale dabei über einen Drehwinkel von 180°, an den maximalen Spiralenradius schließt sich ein entsprechenden Radius aufweisender Restkreis von 180° an. Es ist damit sichergestellt, daß die Schaltbolzen immer von der Kurvenscheibe geführt ist, wenn man von dem Radiensprung zwischen dem maximalen und dem minimalen Radius der Kurvenscheibe absieht. Bei einer sich über einen Drehwinkel von 360° erstreckenden Spirale/Kreis ist es erforderlich, daß der dem ersten Anschlag zugeordnete Stößel in einem Bereich der Kurvenscheibe, der minimalen Radius aufweist, und benachbart zum Bereich der Kurvenscheibe, der maximalen Radius aufweist, auf den zugeordneten Schaltbolzen einwirkt. Bei einer anderen Gestaltung der Kurvenscheibe ist eine solche Anordnung des ersten Anschlages nicht zwingend notwendig.

Aus Verschleißgründen sollte die Kurvenscheibe in dem Bereich, auf den der zugeordnete Schaltbolzen unter Stößelbeaufschlagung auftrifft, mit einem den Stoß dämpfenden Element versehen sein.

Die Länge der jeweiligen Schaltbolzen ist so zu bemessen, daß sie größer ist als die radiale Erstreckung des ringförmigen Schalttellers. Die Enden der Schaltbolzen sind zweckmäßig jeweils linsenförmig ausgebildet. Der Ausschubweg des jeweiligen Schaltbolzens wird zweckmäßig durch schaltbolzen- und schalttellerseitige Anschläge begrenzt. Auf diese Weise ist bei einer schnellen Drehung des Schalttellers ausgeschlossen, daß die Schaltbolzen aus dem Schaltteller austreten.

Eine vorteilhafte Gestaltung sieht vor, daß der Schwenkteller sechs, acht oder zwölf Radialbohrungen bei gleicher Teilung zur Aufnahme der Schaltbolzen aufweist, sowie der erste und der zweite Anschlag so angeordnet sind, daß sie auf diametral plazierte Schaltbolzen einwirken. Im erfindungsgemäßen Sinne ist es nicht erforderlich, daß alle Bohrungen von Schaltbolzen durchsetzt sind, sondern es reicht völlig aus, eine Vielzahl von Bohrungen grundsätzlich vorzusehen, um entsprechend dem jeweils gewünschten Schwenkwinkel dann die Schaltbolzen in entsprechend winkelbeabstandet zueinander angeordnete Bohrungen einzusetzen.

Weitere Merkmale der Erfindung sind in der Beschreibung der Figuren und in den Unteransprüchen dargestellt, wobei bemerkt wird, daß alle Einzelmerkmale und alle Kombinationen von Einzelmerkmalen erfindungswesentlich sind.

In den Figuren ist die Erfindung anhand einer bevorzugten Ausführungsform beispielsweise dargestellt, ohne auf diese beschränkt zu sein. Es stellt dar:

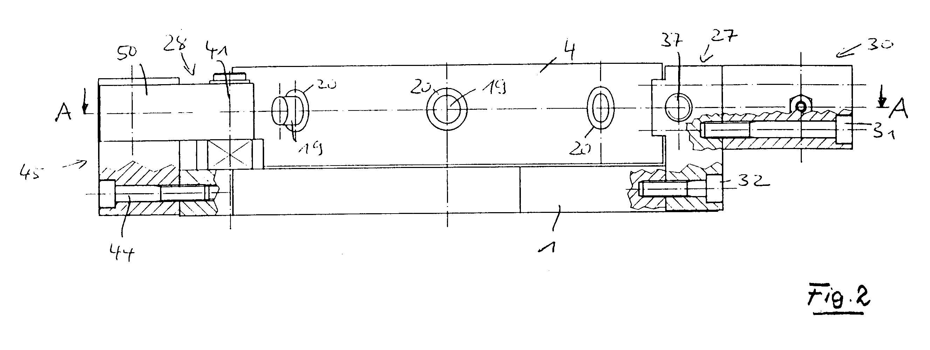

Figur 1 einen Schnitt durch den Rundschalttisch, in dessen Drehebene auf Höhe der Schaltbolzen (gemäß der Linie A-A in Figur 2),
Figur 2 eine Seitenansicht des Rundschalttisches (gemäß Pfeil B in Figur 1),
Figur 3 einen senkrechten Schnitt durch den Rundschalttisch im Bereich der Drehachse des Schalttellers (gemäß der Linie C-C in Figur 1).

Die Figuren zeigen eine Lagerplatte 1 mit einer nach oben offenen kreisförmigen Ausnehmung, die einen Zentrierring 2 aufnimmt, wobei dieser mit seiner äußeren Ringfläche an der inneren vorstehenden Ringfläche der Lagerplatte 1 anliegt. Radial außerhalb des Zentrierringes 2 nimmt die Lagerplatte 1 ein Axialnadellager 3 auf, auf dem ein ringförmiger Schaltteller 4 gelagert ist. Dieser weist einen in die dem Zentrierring 2 zugeordnete Ausnehmung ragenden Ringansatz 5 auf, der unten durch eine Ringschulter 6 begrenzt wird. Zwischen dem Ringansatz 5 und einem nach oben gerichteten zentralen Zapfen 7 der Lagerplatte 1 ist ein Schrägkugellager 8 angeordnet, das sich an der Ringschulter 6 abstützt. Innerhalb des Ringraumes des Schalttellers 4 ist eine Kurvenscheibe 9 angeordnet, die über Zylinderschrauben 10 mit der Lagerplatte 1 verbunden ist, wobei sich ein Ansatz 11 an der Kurvenscheibe 9 am Innenring des Schrägkugellagers 8 abstützt und dieses gegen die Ringschulter 6 des Schalttellers 4 verspannt. Der ringförmige Schaltteller 4 ist damit drehbar in der Lagerplatte 1 gelagert, hingegen ist Kurvenscheibe 9 drehfest mit der Lagerplatte 1 verbunden.

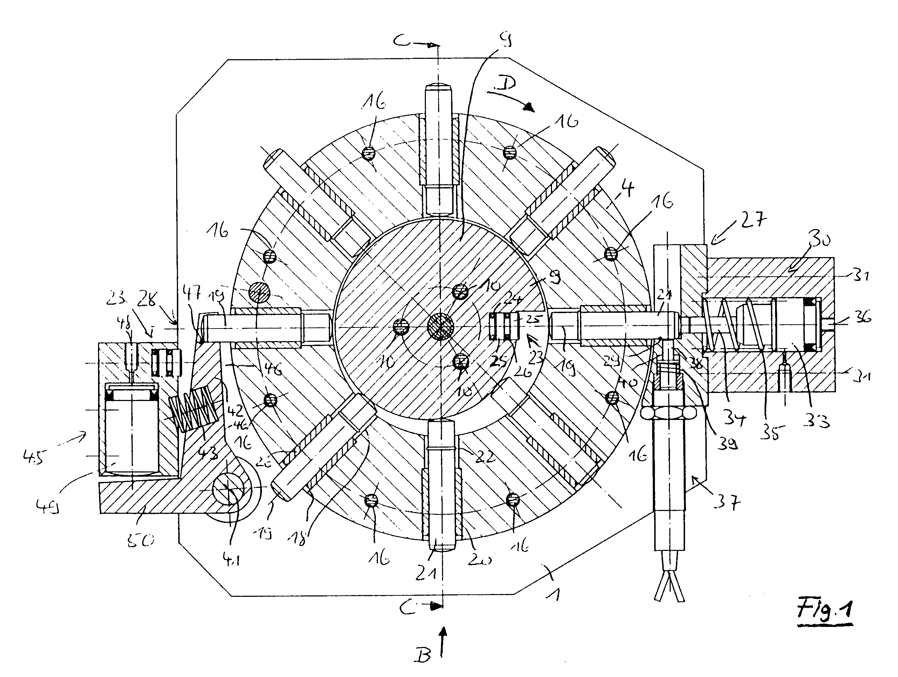

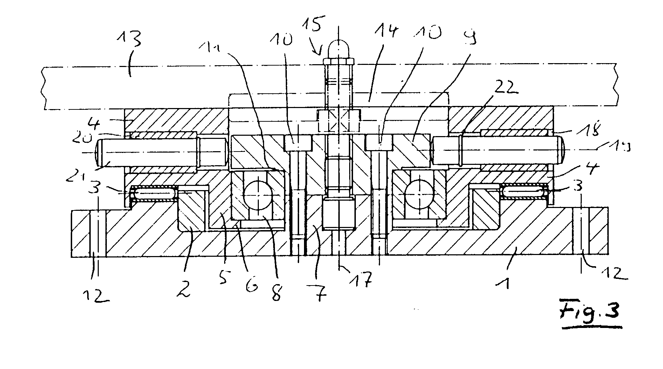

Die in der Darstellung der Figur 3 in der Lagerplatte 1 gezeigten Bohrungen 12 sollen verdeutlichen, daß der Rundschalttisch im Bereich der Lagerplatte 1 mit einer nicht gezeigten Unterlage verbunden werden kann. Des weiteren ist in Figur 3 mit strichpunktierter Linie angedeutet, daß auf den Schaltteller 4 eine Aufnahmeplatte 13 aufgelegt sein kann, die der Aufnahme eines oder mehrerer zu montierender Gegenstände dient. In aller Regel weist die Aufnahmeplatte 13 Kreisform auf. Um eine zentrische Anordnung der Aufnahmeplatte 13 bezüglich des Schalttellers 4 sicherzustellen, ist mit der Unterseite der Aufnahmeplatte 13 eine Zentrierscheibe 14 über eine Schraubverbindung 15 verbunden, und die eigentliche Verbindung der Aufnahmeplatte 13 mit dem Schaltteller 4 erfolgt über diverse Schrauben 16 (siehe Figur 1), die in entsprechenden Gewindebohrungen des Schalttellers 4 eingeschraubt sind.

In Figur 3 ist mit der Bezugsziffer 17 die Drehachse des Schalttellers 4 bezeichnet. Gedreht wird der Schaltteller bei bestimmungsgemäßem Gebrauch des Runschalttisches in Richtung des Pfeiles D gemäß Figur 1.

Den Schaltteller 4 durchsetzen in einer gemeinsamen Drehebene acht Radialbohrungen 18, wobei die Bohrungsachsen 19 benachbarter Radialbohrungen 18 jeweils einen Winkel von 45° miteinander einschließen. Die Radialbohrungen 18 weisen radial außen einen geringfügig größeren Durchmesser auf als radial innen und nehmen im Bereich dieses größeren Durchmessers Büchsen 20 auf. In jeder der Büchsen 20 ist ein Schaltbolzen 21 verschieblich gelagert, dessen Länge größer ist als die radiale Ringstärke des Schalttellers 4. Die beiden Enden des jeweiligen Schaltbolzens 21 sind linsenförmig ausgebildet. Im Bereich des reduzierten Innendurchmessers der jeweiligen Radialbohrung 18 ist mit dem zugeordneten Schaltbolzen 21 ein Sprengring 22 verbunden, derart, daß der Sprengring 22 gerade dann an der zugeordneten Büchse 20 anliegt, wenn das innere Ende des Schaltbolzens 21 mit dem Innendurchmesser des Schalttellers 4 abschließt. In dieser Position steht der jeweilige Schaltbolzen 21 etwa über eine solche Länge über die äußere Kontur des Schalttellers 4 hinaus, die dem Durchmesser des Schaltbolzens 21 entspricht.

Die Kurvenscheibe 9 weist die Form einer sich über einen Drehwinkel von 180° erstreckenden Spirale und eines sich an den maximalen Spiralenradius anschließenden Restkreis von 180° entsprechenden Radius auf. Im Bereich des minimalen Spiralenradius ist die Kurvenscheibe 9 in der Wirkebene der Schaltbolzen 21 mit einer Ausnehmung versehen, die ein stoßdämpfendes Element 23 aufnimmt. Dieses ist durch einen in den Grund der Ausnehmung eingelegten O-Ring 24 und einen weiterhin in die Ausnehmung eingesetzten Stößel 25 mit von diesem aufgenommenem O-Ring 26 gebildet. Während der O-Ring 24 das eigentliche Dämpfelement darstellt, gewährleistet der O-Ring 26 aufgrund des Kontaktes zur Ausnehmungswandung, daß der Stößel 25 sicher in der Ausnehmung gehalten ist. In entspanntem Zustand steht das stoßdämpfende Element 23 geringfügig über den minimalen Radius der Kurvenscheibe 9 hinaus.

Radial außerhalb des Schalttellers 4 ist auf der einen Seite der Lagerplatte 1 ein erster Anschlag 27 und auf der anderen Seite der Lagerplatte 1 ein zweiter Anschlag 28 angeordnet. Der erste Anschlag 27 dient dem Zweck, die Drehbewegung des Schalttellers 4 durch Kontakt mit einem Schaltbolzen 21 in der Drehrichtung D zu begrenzen, während der zweite Anschlag 28 die Drehung des Schalttellers 4 entgegengesetzt der Drehrichtung D begrenzt. Hierzu ist der erste Anschlag 27 fest mit der Lagerplatte 1 verbunden und weist eine radiale Anschlagfläche 29 für den zugeordneten Schaltbolzen 21 auf. Der erste Anschlag 27 ist mit seiner Anschlagfläche 29 so auf der Lagerplatte 1 positioniert, daß bei an der Anschlagfläche 29 anliegendem Schaltbolzen 21 dessen Längsmittelachse bzw. die Bohrungsachse 19 der Radialbohrung 18 mit der Längsmittelachse des stoßdämpfenden Elementes 23 zusammenfällt. Mit dem Anschlag 27 ist eine pneumatisch wirkende Kolben-Zylinder-Einheit 30 mittels Zylinderschrauben 31 verbunden, die Befestigung des ersten Anschlages 27 mit der Lagerplatte 1 erfolgt gleichfalls über Zylinderschrauben 32. Mit dem Kolben 33 der Kolben-Zylinder-Einheit 30 ist ein Stößel 34 verbunden, wobei der Kolben 33 in Einschubrichtung des zugeordneten Schaltbolzens 21 entgegen der Kraft einer Feder 35 beaufschlagbar ist. Mit der Bezugsziffer 36 ist ein Druckluftanschluß bezeichnet.

Dem Erfassen des am Anschlag 27 anliegenden Schaltbolzens 21 dient ein elektrischer Näherungsschalter 37, der mit einem Schaltstift 38 zusammenwirkt. Dieser ist in einer Bohrung des ersten Anschlages 27 gelagert und durchsetzt dessen Anschlagfläche 29. Der Schaltstift 38 ist in Drehrichtung D des Schalttellers 4 gegen die Kraft einer Feder 39 und entgegen der Drehrichtung D gegen einen Vorsprung 40 im Anschlag 27 verschieblich. Bei realtiv gespannter Feder 39, d.h. mittels des zugeordneten Schaltbolzens 21 in die Ebene der Anschlagfläche 29 zurückbewegtem Schaltstift 38 wird der Näherungsschalter 37 betätigt und gibt so die Information weiter, daß der zugeordnete Schaltbolzen 21 am ersten Anschlag 27 anliegt.

Der zweite Anschlag 28 ist um eine parallel zur Drehachse 17 des Schwenktellers 4 angeordnete Achse 41, die in der Lagerplatte 1 gelagert ist, schwenkbar. Ein Schwenkarm 42 des Anschlages 28 ist ausgehend von der Achse 41 in Drehrichtung D des Schalttellers 4 orientiert, und es beaufschlagt eine Feder 43 den Schwenkarm 42 in Richtung des Schalttellers 4. Die Feder 43 stützt sich an einer über Zylinderschrauben 44 mit der Lagerplatte 1 verbundenen Kolben-Zylinder-Einheit 45 ab. Der dem Schaltteller 4 zugewandte Bereich des Schwenkarmes 42 weist eine Gleitfläche 46 für das äußere Ende des jeweils zugeordneten Schaltbolzens 21 auf. Das freie Ende des Schwenkarmes 42 besitzt eine radiale Anschlagfläche 47 für den zugewandten Schaltbolzen 21. Die wiederum pneumatisch wirkende Kolben-Zylinder-Einheit 45, deren Druckluftanschluß mit der Bezugsziffer 48 bezeichnet ist, wirkt über den Kolben 49 auf einen Ansatz 50 des in der Draufsicht L-förmig ausgebildeten zweiten Anschlages 28. Die Anschlagfläche 47 ist unter einem Konuswinkel zur Längsachse 19 des zugeordneten Schaltbolzens 21 angeordnet, derart, daß die nach außen verlängerte Konuslinie die nach radial außen verlängerte Achse 19 schneidet. Auf der dem Schwenkarm 42 zugewandten Seite ist die Kolben-Zylinder-Einheit 45 mit einer Bohrung zur Aufnahme eines stoßdämpfenden Elementes 23 für den Schwenkarm 42 versehen. Die Anschlagflächen 29 und 47 des ersten bzw. zweiten Anschlages 27 bzw. 28 sind so zueinander positioniert, daß sie den Schaltteller 4 über die jeweils diametral angeordneten Schaltbolzen 21 festlegen.

Nachfolgend sei die Funktionsweise des insoweit beschriebenen Rundschalttisches beschrieben:
Auf der Aufnahmeplatte 13 des Rundschalttisches befinden sich ein oder mehrere Gegenstände, wobei für einen nächsten Montageschritt dieses einen Gegenstandes bzw. der Montage am nächstfolgenden Gegenstand die Aufnahmeplatte 13 und damit der Schaltteller 4 zum nächsten Rastieren mit der Lagerplatte um einen Winkel von 45° von Hand zu drehen ist. Zuvor wird der Schaltteller 4 durch Beaufschlagen der Kolben-Zylinder-Einheiten 30 und 45 durch einen Druckluftimpuls freigegeben. Beim Beaufschlagen der Kolben-Zylinder-Einheit 30 verschiebt der Stößel 38 den an der Anschlagfläche 29 anliegenden Schaltbolzen 21 radial nach innen in dessen eingeschobene Position gegen das stoßdämpfende Element 23. Während der Einschiebbewegung gelangt der unter Federvorspannung stehende Schaltstift 38 außer Eingriff mit dem Schaltbolzen 21, so daß der Näherungsschalter 37 in den anderen Schaltzustand überführt wird. Beim Betätigen des zweiten Anschlages 28 mittels der Kolben-Zylinder-Einheit 45 wird der Schwenkarm 42 entgegen der Kraft der Feder 43 mit seiner im Konuswinkel angeordneten Anschlagfläche 47 vom zugeordneten Schaltbolzen 21 wegbewegt. Das Beaufschlagen des Stößels 34 und des Schwenkarmes 42 erfolgt über die Kolben-Zylinder-Einheiten 30 bzw. 45 gleichzeitig. Nach der Freigabe der beiden Schaltbolzen 21 befindet sich der dem ersten Anschlag 27 zugeordnete Schaltbolzen 21 in seiner eingeschobenen und der dem zweiten Anschlag 28 zugeordnete Schaltbolzen 21 in seiner ausgeschobenen Stellung. Aufgrund der Ausbildung der Kurvenscheibe 9 mit der sich stirnseitig über einen Winkel von 180° erstreckende Spirale, wobei der Übergang vom minimalen Radius zum maximalen Radius innerhalb des Winkels von 180° erfolgt, führt eine Drehung des Schalttellers um 180° zum vollständigen Ausfahren des jeweiligen Schaltbolzens 21 zwischen dem ersten Anschlag 27 und dem zweiten Anschlag 28, wobei der Restkreis von 180° mit einem Kreisdurchmesser entsprechend dem maximalen Spiralenradius der weiteren Führung der Schaltbolzen dient. Figur 1 veranschaulicht die Zwischenstellungen der acht Schaltbolzen 21, wobei der dem ersten Anschlag 27 zugeordnete Schaltbolzen 21 nachlaufende Schaltbolzen (Winkelstellung 45°zur Achse C-C) ausgefahren ist und damit unmittelbar gegen die Anschlagfläche 29 bewegt werden kann, während der dem zweiten Anschlag 28 zugeordnete Schaltbolzen 21 nachlaufende Schaltbolzen 21, der entsprechend der Kurvenvorgabe zum Großteil ausgefahren ist (Winkelstellung 225°) beim weiteren Verschwenken um 45° in die Anschlagposition mit seinem äußeren Ende über die Gleitfläche 46 des zweiten Anschlages 28 bewegt wird und dabei den Schwenkarm 42 entgegen der Kraft der Feder 43 vom Schaltteller 4 wegbewegt. Geringfügig bevor der Schaltbolzen 21 die Anschlagfläche 29 des ersten Anschlages 27 erreicht hat, hintergreift die sich zum Schaltteller 4 hin erweiternde konusförmige Anschlagfläche 47 den zugeordneten Schaltbolzen 21, wodurch der Schwenkarm 42 unter der Kraft der Feder 43 mit der Anschlagfläche 47 hinter den Schaltbolzen 21 bewegt wird und über die konische Anschlagfläche 47 den dem ersten Anschlag 27 zugeordneten Schaltbolzen 21 gegen die Anschlagfläche 27 verspannt. Während des Überführens des dem zweiten Anschlag 28 zugeordneten Schaltbolzens 21 in die Anschlagposition kann durch Wahl der Federsteifigkeit 43 die Abbremscharakteristik des Schalttellers 4 variiert werden.

## Patentansprüche

1. Rundschalttisch mit einer Lagerplatte (1), einem in der Lagerplatte (1) drehbar gelagerten Schaltteller (4), mehreren Schaltbolzen (21), die radial gerichtet im Schaltteller (4) gelagert sind, sowie einem mit der Lagerplatte (1) verbundenen Anschlag (28) zum Begrenzen der Drehung des Schalttellers (4) durch Anlage des äußeren Endes eines Schaltbolzens (21) am Anschlag (28), **gekennzeichnet** durch folgende Merkmale:
- einen ringförmigen Schaltteller (4),
- eine Kurvenscheibe (9), die mit der Lagerplatte (1) drehfest verbunden ist und den vom Schaltteller (4) umschlossenen Raum durchsetzt, wobei die Schaltbolzen (21) im Schaltteller (4) verschieblich gelagert sind und das innere Ende des jeweiligen Schaltbolzens (21) mit der Kurve der Kurvenscheibe (9) zusammenwirkt,
- einen ersten Anschlag (27), der mit der Lagerplatte (1) verbunden ist, zum Begrenzen der Drehung des Schalttellers (4) in Drehrichtung (D) durch Anlage des äußeren Endes eines ausgeschobenen Schaltbolzens (21) am ersten Anschlag (27),
- einen zweiten Anschlag (28), der mit der Lagerplatte (1) verbunden ist, zum Begrenzen der Drehung des Schalttellers (4) entgegen der Drehrichtung (D) durch Anlage des äußeren Endes eines ausgeschobenen Schaltbolzens (21) am zweiten Anschlag (28),
- Mitteln (30) im Bereich des ersten Anschlages (27) zum Einschieben des diesem zugeordneten Schaltbolzens (21) gegen die Kurvenscheibe (9).

2. Rundschalttisch nach Anspruch 1, **dadurch gekennzeichnet**,
daß der erste Anschlag (27) fest mit der Lagerplatte(1) verbunden ist und eine radiale Anschlagfläche (29) für die zugeordneten Schaltbolzen (21) aufweist, sowie die Mittel (30) zum Einschieben dieses in Anschlagstellung befindlichen Schaltbolzens (21) einen in dessen Axialrichtung (19) wirksamen kraftbetätigten Stößel (34) umfassen.

3. Rundschalttisch nach Anspruch 2, **dadurch gekennzeichnet**, daß die Mittel (30) eine Kolben-Zylinder-Einheit aufweisen, insbesondere eine pneumatisch wirkende Kolben-Zylinder-Einheit (30), die mit dem Anschlag (27) oder der Lagerplatte (1) fest verbunden ist, wobei mit dem Kolben (33) der Stößel (34) verbunden ist und der Kolben (33) in Einschubrichtung des Schaltbolzens (21) entgegen der Kraft einer Feder (35) beaufschlagbar ist.

4. Rundschalttisch nach einem der Ansprüche 1 bis 3, **dadurch gekennzeichnet**, daß ein dem ersten Anschlag (27) zugeordneter Näherungsschalter (37) zum Erfassen des an diesem Anschlag (27) anliegenden Schaltbolzens (21) vorgesehen ist.

5. Rundschalttisch nach Anspruch 4, **dadurch gekennzeichnet**, daß im ersten Anschlag (27) ein Schaltstift (38) zum Kontaktieren des diesem Anschlag (27) zugeordneten Schaltbolzens (21) angeordnet ist, der die Anschlagfläche (29) durchsetzt, wobei der Schaltstift (38) in Drehrichtung (D) des Schalttellers (4) gegen die Kraft einer Feder (39) und entgegen der Drehrichtung (D) des Schalttellers (4) gegen einen Vorsprung (40) im Anschlag (27) verschieblich ist, wobei ferner mit dem Schaltstift (38) der mit dem Anschlag (27) verbundene Näherungsschalter (37) zusammenwirkt und der Schaltstift (38) den Näherungsschalter (37) bei relativ gespannter Feder (39) betätigt.

6. Rundschalttisch nach einem der Ansprüche 1 bis 5, **dadurch gekennzeichnet**, daß der zweite Anschlag (28) um eine parallel zur Drehachse (17) des Schwenktellers (4) angeordnete Achse (41) schwenkbar mit der Lagerplatte (1) verbunden ist, und ein Schwenkarm (42) dieses Anschlages (18), ausgehend von der Achse (41), in Drehrichtung (D) des Schalttellers (4) orientiert ist, sowie eine Feder (43) den Schwenkarm (42) in Richtung des Schalttellers (4) beaufschlagt, wobei der dem Schaltteller (4) zugewandte Bereich des Schwenkarmes (42) eine Gleitfläche (46) für das äußere Ende des zugeordneten Schaltbolzens (21), sowie das freie Ende des Schwenkarmes (42) eine radiale Anschlagfläche (47) für den zugeordneten Schaltbolzen (21) aufweist.

7. Rundschalttisch nach Anspruch 6, **dadurch gekennzeichnet**, daß Mittel (45) zum Verschwenken des Schwenkarmes (42) entgegen der Kraft der Feder (43) vorgesehen sind.

8. Rundschalttisch nach Anspruch 7, **dadurch gekennzeichnet**, daß die Mittel (45) zum Verschwenken des Schwenkarmes (42) als Kolben-Zylinder-Einheit, insbesondere pneumatisch wirkende Kolben-Zylinder-Einheit (45), ausgebildet sind, wobei der beaufschlagte Kolben (49) auf einen Ansatz (50) des L-förmig ausgebildeten zweiten Anschlages (28) einwirkt.

9. Rundschalttisch nach einem der Ansprüche 6 bis 8, **dadurch gekennzeichnet**, daß die Anschlagfläche (47) unter einem Konuswinkel zur Längsachse (19) des zugeordneten Schaltbolzens (21) angeordnet ist.

10. Rundschalttisch nach einem der Ansprüche 1 bis 9, **dadurch gekennzeichnet**, daß die Anschlagflächen (29, 47) von erstem und zweitem Anschlag (27, 28) nach innen gewölbt ausgebildet sind und eine im wesentlichen der Krümmung des zugeordneten Schaltbolzens (21) entsprechende Krümmung aufweisen.

11. Rundschalttisch nach einem der Ansprüche 1 bis 10, **dadurch gekennzeichnet**, daß die Kurvenscheibe (9) die Form einer Spirale, insbesondere einer sich über einen Drehwinkel von 180° erstreckenden Spirale, an deren maximalen Spiralenradius sich ein entsprechenden Radius aufweisender Restkreis von 180° anschließt, aufweist.

12. Rundschalttisch nach Anspruch 11, **dadurch gekennzeichnet**, daß der dem ersten Anschlag (27) zugeordnete Stößel (34) in einem Bereich der Kurvenscheibe (9), der minimalen Radius aufweist und benachbart zum Bereich der Kurvenscheibe (9), der maximalen Radius aufweist, auf den zugeordneten Schaltbolzen (21) einwirkt.

13. Rundschalttisch nach Anspruch 12, **dadurch gekennzeichnet**, daß die Kurvenscheibe (9) in dem Bereich, auf den der zugeordnete Schaltbolzen (21) unter Stößelbeaufschlagung auftrifft mit einem den Stoß dämpfenden Element (23) versehen ist.

14. Rundschalttisch nach einem der Ansprüche 1 bis 13, **dadurch gekennzeichnet**, daß der maximale Radius der Spirale (9) geringfügig geringer ist als der Innendurchmesser des ringförmigen Schalttellers (4), und die Schaltbolzen (21) mindestens entsprechend der radialen Erstreckung der Anschlagflächen (29, 47) von erstem und zweitem Anschlag (27, 28) länger sind als die radiale Erstreckung des Schalttellerringes.

15. Rundschalttisch nach einem der Ansprüche 1 bis 14, **dadurch gekennzeichnet**, daß die Enden der Schaltbolzen (21) jeweils linsenförmig ausgebildet sind.

16. Rundschalttisch nach einem der Ansprüche 1 bis 15, **dadurch gekennzeichnet**, daß der Ausschubweg des jeweiligen Schaltbolzens (21) durch schaltbolzen- und schalttellerseitige Anschläge (22, 20) begrenzt ist.

17. Rundschalttisch nach einem der Ansprüche 1 bis 16, **dadurch gekennzeichnet**, daß der Schaltteller (4) sechs, acht oder zwölf radial angeordnete Bohrungen (18) bei gleicher Teilung zur Aufnahme der Schaltbolzen (21) aufweist, sowie der erste und zweite Anschlag (27, 28) so angeordnet sind, daß sie auf diametral plazierte Schaltbolzen (21) einwirken.

## Claims

1. A rotary indexing table having a sole plate (1), an indexing plate (4) rotatably mounted in the sole plate (1), a plurality of indexing pins (21) which are mounted radially oriented in the indexing plate (4), and having a stop (28) attached to the sole plate (1) for limiting the rotation of the indexing plate (4) due to the outer end of an indexing pin (21) contacting the stop (28), characterised by the following features:
- an annular indexing plate (4),
- a cam disc (9) which is attached rotationally fixed to the sole plate (1) and which penetrates the space encompassed by the indexing plate (4), wherein the indexing pins (21) are displaceably mounted in the indexing plate (4) and the inner end of the respective indexing pin (21) cooperates with the curve of the cam disc (9),
- a first stop (27) which is attached to the sole plate (1) for limiting the rotation of the indexing plate (4) in a direction of rotation (D) due to the outer end of a pushed-out indexing pin (21) contacting the first stop (27),
- a second stop (28) which is attached to the sole plate (1) for limiting the rotation of the indexing plate (4) opposite the direction of rotation (D) due to the outer end of a pushed-out indexing pin (21) contacting the second stop (28),
- means (30) in the region of the first stop (27) for pushing in the indexing pin (21) associated with the latter towards the cam disc (9).

2. A rotary indexing table according to claim 1, characterised in that the first stop (27) is attached fixed to the sole plate (1) and has a radial stop face (29) for the associated indexing pin (21), and that the means (30) for pushing in this indexing pin (21) situated in the stop position comprise a power operated plunger (34) acting in the axial direction (19) of the indexing pin.

3. A rotary indexing table according to claim 2, characterised in that the means (30) comprise a piston-and-cylinder unit, particularly a pneumatically acting piston-and-cylinder unit (30), which is attached fixed to the stop (27) or the sole plate (1), wherein the plunger (34) is attached to the piston (33) and the piston (33) can be acted upon in the direction of pushing in the indexing pin (21) against the force of a spring (35).

4. A rotary indexing table according to any one of claims 1 to 3, characterised in that a proximity switch (37) associated with the first stop (27) is provided for detecting the indexing pin (21) seated against this stop (27).

5. A rotary indexing table according to claim 4, characterised in that an actuating pin (38) for contacting the indexing pin (21) associated with the first stop (27) is disposed in this stop (27), which actuating pin penetrates the stop face (29), wherein the actuating pin (38) is displaceable in the direction of rotation (D) of the indexing plate (4) against the force of a spring (39) and is displaceable opposite the direction of rotation (D) of the indexing plate (4) towards a projection (40) in the stop (27), wherein in addition the proximity switch (37) attached to the stop (27) cooperates with the actuating pin (38) and the actuating pin (38) actuates the proximity switch (37) when the spring (39) is relatively stressed.

6. A rotary indexing table according to any one of claims 1 to 5, characterised in that the second stop (28) is attached to the sole plate (1) so that it can swivel about an axis (41) disposed parallel to the axis of rotation (17) of the indexing plate (4), and a swivelling arm (42) of this stop (28) is oriented in the direction of rotation (D) of the indexing plate (4), starting from the axis (41), and that a spring (43) acts upon the swivelling arm (42) in the direction of the indexing plate (4), wherein the region of the swivelling arm (42) facing the indexing plate (4) has a sliding surface (46) for the outer end of the associated indexing pin (21), and that the free end of the swivelling arm (42) has a radial stop face (47) for the associated indexing pin (21).

7. A rotary indexing table according to claim 6, characterised in that means (45) are provided for swivelling the swivelling arm (42) against the force of the spring (43).

8. A rotary indexing table according to claim 7, characterised in that the means (45) for swivelling the swivelling arm (42) are designed as a piston-and-cylinder unit, particularly a pneumatically acting piston-and-cylinder unit (45), wherein the actuated piston (49) acts on a projection (50) of the second stop (28), which is of L-shaped construction.

9. A rotary indexing table according to any one of claims 6 to 8, characterised in that the stop face (47) is disposed at a tapered angle to the longitudinal axis (19) of the associated indexing pin (21).

10. A rotary indexing table according to any one of claims 1 to 9, characterised in that the stop faces (29, 47) of the first and the second stops (27, 28) are of inwardly curved construction and have a curvature substantially corresponding to the curvature of the associated indexing pin (21).

11. A rotary indexing table according to any one of claims 1 to 10, characterised in that the cam disc (9) has the shape of a spiral, particularly a spiral extending over an angle of rotation of 180°, wherein a residual circle of 180° having a corresponding radius adjoins the maximum spiral radius of the spiral.

12. A rotary indexing table according to claim 11, characterised in that the plunger (34) associated with the first stop (27) acts on the associated indexing pin (21) in a region of the cam disc (9) which has the minimum radius, and adjacent to the region of the cam disc (9) which has the maximum radius.

13. A rotary indexing table according to claim 12, characterised in that the cam disc (9) is provided with an element (23) which damps the impact in the region which the associated indexing pin (21) strikes under the action of the plunger.

14. A rotary indexing table according to any one of claims 1 to 13, characterised in that the maximum radius of the spiral (9) is slightly less than the inside diameter of the annular indexing plate (4), and the indexing pins (21) are longer than the radial extent of the indexing plate ring by at least the radial extent of the stop faces (29, 47) of the first and the second stops (27, 28).

15. A rotary indexing table according to any one of claims 1 to 14, characterised in that the ends of the indexing pins (21) are each of lenticular construction.

16. A rotary indexing table according to any one of claims 1 to 15, characterised in that the push-out travel of the respective indexing pin (21) is limited by stops (22, 20) on the indexing pin and indexing plate.

17. A rotary indexing table according to any one of claims 1 to 16, characterised in that the indexing plate (4) has six, eight or twelve radially disposed bores (18) at identical intervals for receiving the indexing pins (21), and that the first and second stops (27, 28) are disposed so that they act on diametrically situated indexing pins (21).

## Revendications

1. Table manuelle à transfert circulaire avec une plaque d'appui (1), un plateau à transfert circulaire (4) monté de façon à pouvoir tourner sur la plaque d'appui (1), plusieurs boulons de mise au point (21), qui sont montés de façon à être dirigés radialement dans le plateau à transfert circulaire (4), ainsi qu'avec une butée (28) reliée à la plaque d'appui (1) pour limiter la rotation du plateau à transfert circulaire (4) en amenant l'extrémité extérieure d'un boulon de mise au point (21) sur la butée (28), table manuelle à transfert circulaire caractérisée par les particularités suivantes :
- un plateau à transfert circulaire (4),
- une came (9), qui est reliée de façon solidaire à la plaque d'appui (1) et traverse l'espace entouré par le plateau à transfert circulaire (4), les boulons de mise au point (21) sont montés de façon coulissante dans le plateau à transfert circulaire (4) et l'extrémité inférieure du boulon de mise au point (21) correspondant coopère avec la courbe de la came (9),
- une première butée (27), qui est reliée à la plaque d'appui (1), pour limiter la rotation du plateau à transfert circulaire (4) dans le sens de rotation (D) par l'appui de l'extrémité extérieure d'un boulon de mise au point (21) poussé à l'extérieur sur la première butée (27),
- une deuxième butée (28), qui est reliée à la plaque d'appui (1), pour limiter la rotation du plateau à transfert circulaire (4) en sens opposé du sens de rotation (D) en mettant en appui l'extrémité extérieure d'un boulon de mise au point (21) poussé à l'extérieur sur la deuxième butée (28),
- des moyens (30) dans la zone de la première butée (27) pour enfoncer le boulon de mise au point (21) correspondant à celle-ci et l'amener contre la came (9).

2. Table manuelle à transfert circulaire selon la revendication 1, caractérisée en ce que la première butée (27) est reliée de façon solidaire à la plaque d'appui (1) et présente une surface radiale de butée (29) pour les boulons de mise au point correspondants (21), et en ce que les moyens (30) pour enfoncer ces boulons de mise au point (21) se trouvant en position de butée comprennent un poussoir (34) actionné par une force opérationnelle dans son sens axial (19).

3. Table manuelle à transfert circulaire selon la revendication 2, caractérisée en ce que les moyens (30) présentent un vérin à piston et cylindre, en particulier un vérin à piston et cylindre agissant de façon pneumatique (30), qui est relié solidairement à la butée (27) ou à la plaque d'appui (1), le poussoir (34) étant relié au piston (33) et le piston (33) pouvant être actionné dans le sens de l'enfoncement du boulon de mise au point (21) à l'encontre de la force d'un ressort (35).

4. Table manuelle selon l'une des revendications 1 à 3, caractérisée en ce qu'un commutateur de proximité (37) associé à la première butée (27) est prévu pour détecter le boulon de mise au point (21) reposant sur cette butée (27).

5. Table manuelle à transfert circulaire selon la revendication 4, caractérisée en ce que dans la première butée (27), on dispose une broche de manoeuvre (38) pour venir en contact avec le boulon de mise au point (21) associé à cette butée (27), boulon qui passe à travers la surface de butée (29), la broche de manoeuvre (38) pouvant coulisser dans le sens de rotation (D) du plateau à transfert circulaire (4) à l'encontre de la force d'un ressort (39) et à l'encontre du sens de rotation (D) du plateau à transfert circulaire (4) contre une saillie (40) dans la butée (27), le commutateur de proximité (37) relié à la butée (27) coopérant en outre avec la broche de manoeuvre (38) et la broche de manoeuvre (38) actionnant le commutateur de proximité (37) quand le ressort (39) est relativement tendu.

6. Table manuelle à transfert circulaire selon l'une des revendications 1 à 5, caractérisée en ce que la deuxième butée (28) est reliée à la plaque d'appui (1) de façon à pouvoir pivoter autour d'un axe (41) disposé parallèlement à l'axe de rotation (17) du plateau à transfert circulaire (4) et un bras pivotant (42) de cette butée (18) est orienté en partant de l'axe (41) dans le sens de rotation (D) du plateau à transfert circulaire (4), de même qu'un ressort (43) actionne le bras pivotant (42) dans le sens du plateau à transfert circulaire (4), la zone du bras pivotant (42) tournée vers le plateau à transfert circulaire (4) présentant une surface de glissement (46) pour l'extrémité extérieure du boulon de mise au point (21) correspondant, de même que l'extrémité libre du bras pivotant (42) présente une surface de butée (47) pour le boulon de mise au point (21) correspondant.

7. Table manuelle à transfert circulaire, selon la revendication 6, caractérisée en ce que l'on prévoit des moyens (45) servant à faire pivoter le bras pivotant (42) à l'encontre de la force du ressort (43).

8. Table manuelle à transfert circulaire, selon la revendication 7, caractérisée en ce que les moyens (45) servant à faire pivoter le bras pivotant (42) sont constitués sous la forme d'un vérin à piston et cylindre, en particulier d'un vérin à piston et cylindre (45) fonctionnant de façon pneumatique le piston (49) actionné agissant sur un appendice (50) de la deuxième butée (28) constituée en forme de L

9. Table manuelle à transfert circulaire selon l'une des revendications 6 à 8, caractérisée en ce que la surface de butée (47) est disposée en formant un angle d'entrée par rapport à l'axe longitudinal (19) du boulon de mise au point (21) correspondant.

10. Table manuelle à transfert circulaire selon l'une des revendications 1 à 9, caractérisée en ce que les surfaces (29, 47) de la première et de la seconde butée (27, 28) sont bombées vers l'extérieur et présentent une courbure correspondant sensiblement à la courbure du boulon de mise au point (21) correspondant.

11. Table manuelle à transfert circulaire, selon l'une des revendications 1 à 10, caractérisée en ce que la came (9) présente la forme d'une spirale, en particulier d'une spirale qui s'étend sur un angle de 180°, tandis qu'au rayon maximal de cette spirale se raccorde un demi-cercle de 180° présentant un rayon correspondant.

12. Table manuelle à transfert circulaire selon la revendication 11, caractérisée en ce que le poussoir (34) associé à la première butée (27) agit dans une zone de la came (9), qui présente le rayon minimal et au voisinage de la zone de la came (9), qui présente le rayon maximal, sur le boulon de mise au point (21) correspondant.

13. Table manuelle à transfert circulaire, caractérisée en ce que la came (9) est pourvue, dans la zone sur laquelle le boulon de mise au point (21) correspondant vient à être actionné par un poussoir, d'un élément (23) qui amortit le choc.

14. Table manuelle à transfert circulaire, selon l'une des revendications 1 à 13, caractérisée en ce que le rayon maximal de la spirale (9) est légèrement plus faible que le diamètre intérieur du plateau à transfert circulaire (4) de forme annulaire, et en ce que les boulons de mise au point (21) au moins par rapport à l'étendue radiale des surfaces de butée (29, 47) de la première et de la seconde butée (27, 28) sont plus longs que l'étendue radiale de l'anneau du plateau à transfert circulaire.

15. Table manuelle à transfert circulaire selon l'une des revendications 1 à 14, caractérisée en ce que les extrémités des boulons de mise au point (21) sont respectivement constituées en forme de lentilles.

16. Table manuelle à transfert circulaire selon l'une des revendications 1 à 15, caractérisée en ce que le trajet de coulissement du boulon de mise au point correspondant (21) est limité par des butées (22, 20) situées du côté du boulon de mise au point et du côté du plateau à transfert circulaire.

17. Table manuelle à transfert circulaire, selon l'une des revendications 1 à 16, caractérisée en ce que le plateau à transfert circulaire (4) présente six, huit ou douze alésages disposés radialement (18), avec une égale répartition pour recevoir les boulons de mise au point (21), et en ce que la première et la deuxième butée (27, 28) sont disposées de telle façon qu'elles agissent sur des boulons de mise au point (21) placés diamétralement.
